(19) Europäisches Patentamt
European Patent Office
Office européen des brevets

(11) Veröffentlichungsnummer: **0 046 250**
**B1**

(12) # EUROPÄISCHE PATENTSCHRIFT

(45) Veröffentlichungstag der Patentschrift: **20.07.83**

(51) Int. Cl.³: **C 09 B 67/22,** D 06 P 1/16, C 09 B 57/02, C 09 B 57/14

(21) Anmeldenummer: **81106200.9**

(22) Anmeldetag: **07.08.81**

(54) **Farbstoffpräparation sowie deren Verwendung als Warn- und Signalfarbe.**

(30) Priorität: **20.08.80 DE 3031326**

(43) Veröffentlichungstag der Anmeldung: **24.02.82 Patentblatt 82/8**

(45) Bekanntmachung des Hinweises auf die Patenterteilung: **20.07.83 Patentblatt 83/29**

(84) Benannte Vertragsstaaten: **CH DE FR GB IT LI**

(56) Entgegenhaltungen:
**EP-A-0 025 136**
**EP-A-0 026 463**
**DE-A-2 126 811**
**DE-A-2 844 299**
**DE-B-1 098 125**
**DE-B-1 469 770**
**DE-B-1 569 761**
**DE-B-1 770 818**
**DE-B-2 005 933**
**DE-B-2 030 507**
**DE-B-2 529 434**

(73) Patentinhaber: **BAYER AG, Zentralbereich Patente, Marken und Lizenzen, D-5090 Leverkusen 1, Bayerwerk (DE)**

(72) Erfinder: **Harnisch, Horst, Dr., Heinenbusch 4, D-5203 Much (DE)**
Erfinder: **Wiegner, Dieter, Nothauser Feld 4, D-5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 046 250 B1

ACTORUM AG

# Farbstoffpräparation sowie deren Verwendung als Warn- und Signalfarbe

Gegenstand der Erfindung sind Präparationen von Dispersionsfarbstoffen mit einem fluoreszierenden Orange-Rot-Farbton gemäss der vom Ausschuss für Lieferbedingungen und Gütersicherung beim deutschen Normenausschuss festgelegten Norm RAL 2005 und einem Leuchtdichtefaktor $\beta \geq 0.45$ gemäss DIN 16954, sowie deren Verwendung zum Färben von Textilmaterialien zur Herstellung von Warnkleidung, Warn- und Signalzeichen und Sportartikeln.

Warnkleidung, wie Warnwesten, -jacken und -hosen, sowie Warnzeichen, wie Armbinden, Gurte und Mützenbezüge, die jene Normen erfüllen, wurden bisher praktisch ausschliesslich durch direktes Aufbringen einer Polyamid- oder Polyurethanbeschichtung, in welche fluoreszierende Pigmente eingebettet sind, auf Baumwollgewebe hergestellt.

Diese Bekleidung weist jedoch den Nachteil auf, dass die Beschichtungen nicht genügend abriebfest sind und die darin enthaltenen Pigmente nur eine geringe Lichtechtheit aufweisen.

Versuche, fluoreszierende Farbstoffe mit jenem normgerechten Orange-Rot-Farbton direkt auf die Textilfasern zu bringen, waren bislang wenig erfolgreich, da die hierfür verwendeten Farbstoffe nicht die geforderte hohe Leuchtkraft und/oder ausreichende Gebrauchsechtheiten ergaben und Mischungen von an sich geeigneten Fluoreszenz-Farbstoffen eine Fluoreszenzminderung oder -löschung zeigten.

Es wurde nun gefunden, dass man hydrophobe Fasermaterialien direkt, d.h. ohne Verwendung von Bindern, Beschichtungsmittel etc., in dem gewünschten Farbton und entsprechend den geforderten Normwerten färben kann, wenn man Farbstoffpräparationen verwendet, die eine Mischung eines Gelbfarbstoffs der Formel

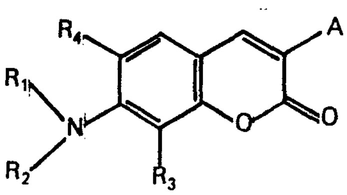

(Ia)

worin

$R_1$ und $R_2$ $C_1$-$C_4$-Alkyl oder Phenyl-$C_1$-$C_3$-alkyl und $R_3$ und $R_4$ Wasserstoff bedeuten,

$R_1$ und $R_2$ gemeinsam einen Rest der Formel $-(CH_2)_2$-Z-$(CH_2)_2$-

$R_1$ mit $R_4$ einen Rest der Formel $-(CH_2)_2-$,$-(CH_2)_3-$ oder $-C(CH_3)_2-CH_2-CH(CH_3)-$ und

$R_2$ mit $R_3$ einen Rest der Formel $-(CH_2)_3-$

bilden können, wobei

Z für O, NH, N-$CH_3$, $CH_2$ oder eine direkte Bindung und

A für einen Rest der Benzoxazol-, Benzimidazol-, Benzthiazol-, Chinazolon- oder Thiadiazolreihe steht, oder eines Farbstoffs der Formel

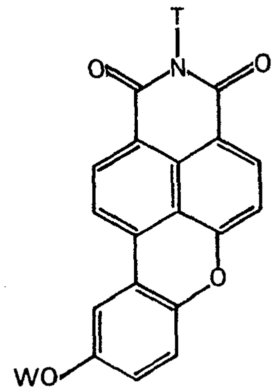

(Ib)

worin

W für $C_1$-$C_2$-Alkyl und

T für $C_1$-$C_4$-Alkoxy, Phenyl, oder C1 substituiertes $C_1$-$C_6$-Alkyl stehen,

mit einem Rot-Farbstoff der Formel

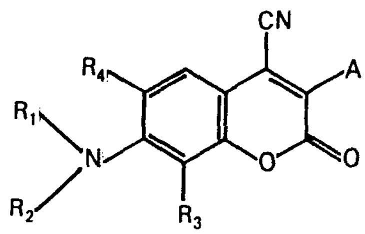

(II)

worin

$R_1$, $R_2$, $R_3$, $R_4$ und A die oben angegebene Bedeutung haben, enthalten.

Die Farbstoffe der Formeln Ia, Ib und II sind durchweg bekannt und beispielsweise in der folgenden Patentliteratur beschrieben: DE-B 1098125, DE-B 1569761, DE-B 1469770, DE-B 1770818, DE-B 2005933, DE-B 2030507, 2126811, 2529434 und DE-A 2844299.

Farbstoffe des Typs Ia können leicht nach der in DE-A 2844299 beschriebenen Methode mit Alkalicyanid und anschliessende Oxidation z.B. mit Brom in Farbstoffe des Typs II übergeführt werden.

Die heterocyclischen Reste A in Formel (Ia und II) können übliche Substituenten enthalten, z.B. $C_1$-$C_4$-Alkyl, $C_1$-$C_4$-Alkoxy, Chlor, $C_1$-$C_2$-Alkoxycarbonyl, $C_1$-$C_4$-Alkylsulfonyl, Cyclohexyl, Phenyl oder Phenyl-$C_1$-$C_3$-alkyl.

Bevorzugt sind Farbstoffpräparationen, die Mischungen von Farbstoffen der Formel Ia und II, worin

$R_1$ und $R_2$ für $C_1$-$C_4$-Alkyl stehen und

A einen Rest der Formeln

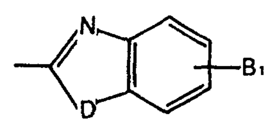

oder

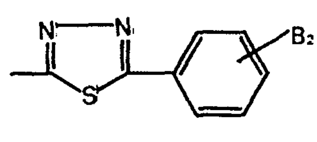

worin
$B_1$ = H, Cl, $CH_3$, $CH_3O$ oder $C_2H_5O$
$B_2$ = H, $CH_3$ oder Cl
D = O, S, NH, N-$C_1$-$C_4$-Alkyl oder NHCO (CO am Aromaten),
$R_3$ und $R_4$ Wasserstoff bedeuten, enthalten.

Von besonderer technischer Bedeutung sind Farbstoffpräparationen, die eine Mischung eines Farbstoffs der Formel

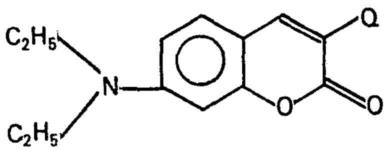

(III)

worin
Q für einen Rest der Formeln

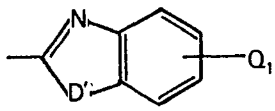

oder

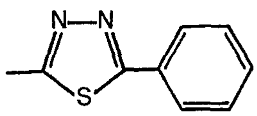

$Q^1$ für H, $CH_3$ oder Cl und
D′ für O, S, NH oder NHCO (CO an Aromaten) stehen, mit einem Farbstoff der Formel

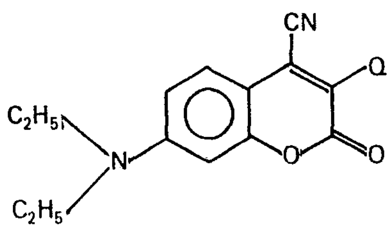

(IV)

worin Q die oben angegebene Bedeutung hat, enthalten.

Ganz besonders bevorzugt sind Farbstoffkomponenten der Formel III und IV mit D′ = O oder S.

Das zur Einstellung des gewünschten Farbtons erforderliche Mischungsverhältnis der Gelb- und Rotfarbstoffe kann in üblicher Weise durch eine Farbrezepturberechnung ermittelt werden.

Die neuen Farbstoffpräparate können neben der erfindungswesentlichen Farbstoffmischung übliche Hilfsmittel, wie Dispergier- und Streckmittel, enthalten.

Sie eignen sich zum Färben und Bedrucken der üblichen hydrophoben Fasern, wie Celluloseester-, synthetischen Polyamid- und insbesondere Polyesterfasern nach bekannten Methoden, vorzugsweise nach dem Hochtemperaturverfahren bei 110–140°C.

Der gewünschte Farbton kann selbstverständlich auch dadurch erzeugt werden, dass man die Einzelfarbstoffe im Färbebad miteinander vermischt.

Beispiel 1

Eine Polyesterwirkware wird bei 40°C in ein Färbebad eingebracht, das bei einem Flottenverhältnis von 1:20 und einem pH-Wert von 5 1 g/l eines handelsüblichen anionischen Dispergiermittels und 3% einer feinverteilten 1:1 Mischung der Farbstoffe der Formel

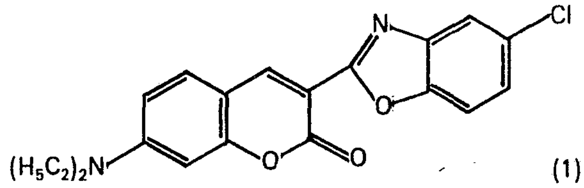

(1)

(10%ig, mit üblichen Stellmitteln)

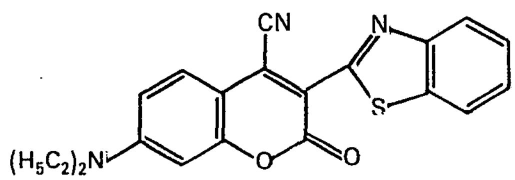

(2)

(10%ig, mit üblichen Stellmitteln)

enthält. Man färbt 60 Min. bei 130°C und unterwirft die erhaltene Färbung einer üblichen alkalisch-reduktiven Nachbehandlung.

Die so gefärbte Wirkware entspricht dem Farbton RAL 2005 und hat einen Leuchtdichtefaktor β = 0.47.

Verfärbt man wie vorstehend angegeben, ersetzt jedoch den Gelbfarbstoff (1) durch einen anderen Farbstoff der Formel Ia entsprechend seinem Färbeäquivalent (definiert nach DIN 53 204), so erhält man ebenfalls normgerechte Leuchtorangefärbungen mit den angegebenen Leuchtdichtefaktoren:

Mischungen des Farbstoffs (2) mit Gelbfarbstoffen der Formel Ia

| Beispiel | $R_1$ | $R_2$ | $R_3$ | $R_4$ | A | β |
|---|---|---|---|---|---|---|
| 2 | $C_2H_5$ | $C_2H_5$ | H | H | 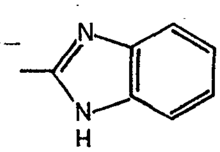 | 0.46 |

Mischungen des Farbstoffs (2) mit Gelbfarbstoffen der Formel Ia

| Beispiel | $R_1$ | $R_2$ | $R_3$ | $R_4$ | A | β |
|---|---|---|---|---|---|---|
| 3 | $C_2H_5$ | $C_2H_5$ | H | H | 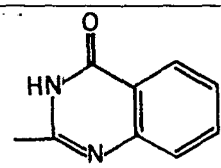 | 0.45 |
| 4 | $C_2H_5$ | $C_2H_5$ | H | H | 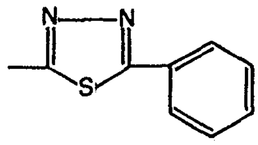 | 0.47 |
| 5 | $C_2H_5$ | $C_2H_5$ | H | H | 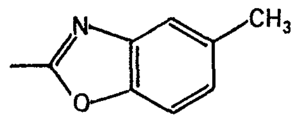 | 0.45 |
| 6 | n-$C_4H_9$ | n-$C_4H_9$ | H | H | 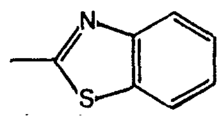 | 0.45 |

Verfährt man wie vorstehend angegeben, ersetzt jedoch den Rotfarbstoff (2) durch einen anderen Farbstoff der Formel II entsprechend seinem Färbeäquivalent (definiert nach DIN 53204), so erhält man ebenfalls normgerechte Leuchtorangefärbungen mit den angegebenen Leuchtdichtefaktoren:

Mischungen des Farbstoffs (1) mit Rotfarbstoffen der Formel II

| Beispiel | $R_1$ | $R_2$ | $R_3$ | $R_4$ | A | β |
|---|---|---|---|---|---|---|
| 7 | $C_2H_5$ | $C_2H_5$ | H | H | 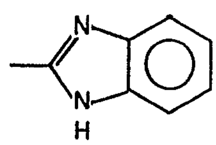 | 0.45 |
| 8 | $C_2H_5$ | $C_2H_5$ | H | H | 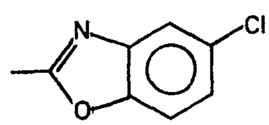 | 0.47 |
| 9 | $C_2H_5$ | $C_2H_5$ | H | H | 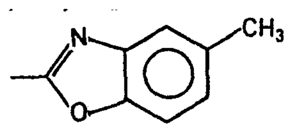 | 0.46 |
| 10 | $C_2H_5$ | $C_2H_5$ | H | H | 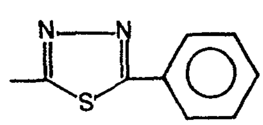 | 0.46 |
| 11 | $C_2H_5$ | $C_2H_5$ | H | H | 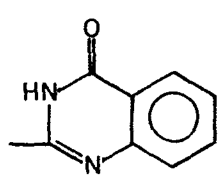 | 0.45 |
| 12 | n-$C_4H_9$ | n-$C_4H_9$ | H | H | 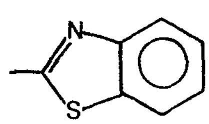 | 0.47 |

Beispiel 13

Man verfährt, wie in Beispiel 1 angegeben, ersetzt jedoch den Gelbfarbstoff der Formel (1) durch den Farbstoff der Formel

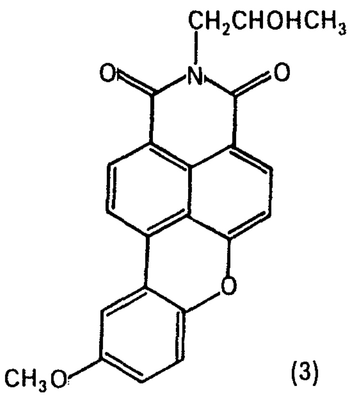

(3)

entsprechend seinem Färbeäquivalent (definiert nach DIN 53204). Man erhält ebenfalls eine Färbung im gewünschten Signalorangeton mit einem β-Wert = 0,45.

Ebenfalls normgerechte Leuchtorangefärbungen mit Leuchtdichtefaktoren β ≧ 0,45 werden erhalten, wenn man den Rotfarbstoff (2) durch einen von den in Beispiel 7-12 aufgeführten Farbstoffen entsprechend ihrem Färbeäquivalent ersetzt.

**Patentansprüche**

1. Farbstoffpräparation von fluoreszierenden Dispersionsfarbstoffen mit einem Leuchtorange-Farbton gemäss der vom Ausschuss für Lieferbedingungen und Gütesicherung beim deutschen Normenausschuss festgelegten Norm RAL 2005 und einem Leuchtdichtefaktor β ≧ 0.45 gemäss DIN 16954, enthaltend eine Mischung eines Gelb-Farbstoffs der Formel

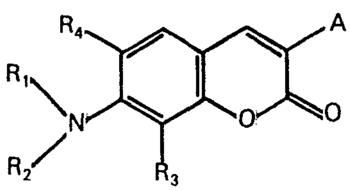

(Ia)

worin

$R_1$ und $R_2$ $C_1$-$C_4$-Alkyl oder Phenyl-$C_1$-$C_3$-alkyl und $R_3$ und $R_4$ Wasserstoff bedeuten,

$R_1$ und $R_2$ gemeinsam einen Rest der Formel

$-(CH_2)_2-Z-(CH_2)_2-$,

$R_1$ mit $R_4$ einen Rest der Formel $-(CH)_2-$, $-(CH_2)_3-$ oder $-C(CH_3)_2-CH_2-CH(CH_3)-$ und

$R_2$ und $R_3$ einen Rest der Formel $-(CH_2)_3-$ bilden können, wobei

Z für O, NH, $NCH_3$, $CH_2$ oder eine direkte Bindung,

A für einen Rest der Benzoxazol-, Benzimidazol-, Benzthiazol-, Chinazolon- oder Thiadiazolreihe steht, oder eines Farbstoffs der Formel

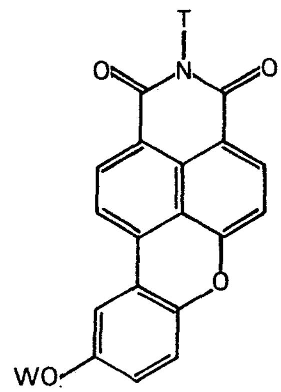

(Ib)

worin

W für $C_1$-$C_2$-Alkyl,

T für gegebenenfalls durch OH, $C_1$-$C_4$-Alkoxy, Phenyl oder Cl substituiertes $C_1$-$C_6$-Alkyl stehen,

mit einem Rot-Farbstoff der Formel

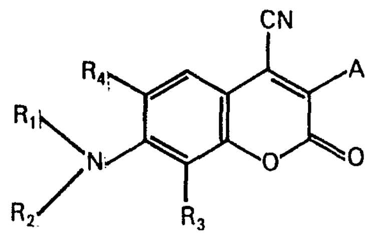

(II)

worin

$R_1$, $R_2$, $R_3$, $R_4$ und A die obengenannte Bedeutung haben.

2. Farbstoffpräparationen gemäss Anspruch 1, enthaltend eine Mischung eines Farbstoffs der Formel

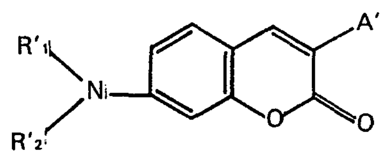

worin

$R_1$ und $R_2$ für $C_1$-$C_4$-Alkyl,

A' für einen Rest der Formel

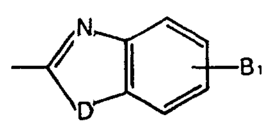

oder

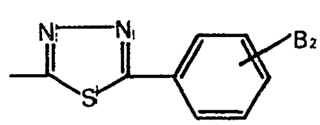

$B_1$ für H, Cl, $CH_3$, $CH_3O$ oder $C_2H_5$-O

$B_2$ für H, $CH_3$ oder Cl und

D für O, S, NH, N-$C_1$-$C_4$-Alkyl oder NHCO (CO am Aromaten) stehen,

mit einem Farbstoff der Formel

worin
$R_1'$, $R_2'$ und A' die oben genannte Bedeutung haben.

3. Farbstoffpräparationen gemäss Anspruch 1, enthaltend eine Mischung eines Farbstoffs der Formel

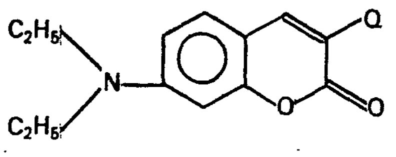

worin
Q für einen Rest der Formel

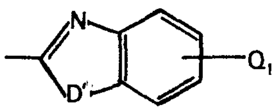

oder

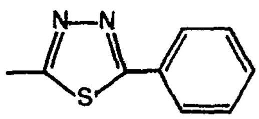

$Q_1$ für H, $CH_3$ oder Cl und
D' für O, S, NH oder NHCO (CO am Aromaten) stehen,
mit einem Farbstoff der Formel

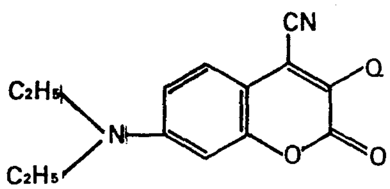

worin Q die oben genannte Bedeutung hat.

4. Farbstoffpräparationen gemäss Anspruch 3, worin D' für O oder S steht.

5. Farbstoffpräparationen gemäss Anspruch 1, enthaltend eine Mischung eines Farbstoffs der Formel

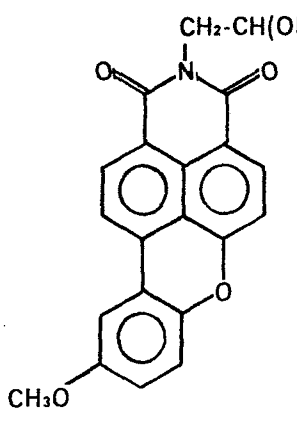

mit einem Rotfarbstoff der Formel

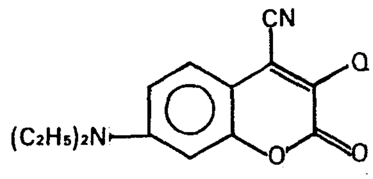

worin Q die gleiche Bedeutung wie in Anspruch 3 hat.

6. Verwendung der Farbstoffpräparationen gemäss Anspruch 1 zum Färben oder Bedrucken von Textilmaterialien zur Herstellung von Warnkleidung, Warn- und Signalzeichen und Sportartikeln.

7. Verfahren zum Färben oder Bedrucken von Textilmaterialien, dadurch gekennzeichnet, dass man Färbebäder bzw. Druckpasten verwendet, die eine Mischung von Farbstoffen gemäss Anspruch 1 enthalten.

## Claims

1. Dyestuff preparation of fluorescent disperse dyestuffs with a luminous orange colour shade according to the Standard RAL 2005 laid down by the German Standards Sub-Committee for Terms of Delivery and Quality Assurance, and a luminance factor β of ≧ 0.45 according to DIN 16,954, containing a mixture of a yellow dyestuff of the formula

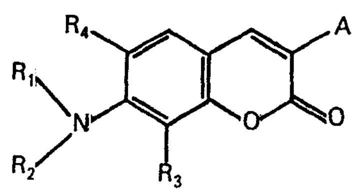

(Ia)

wherein
$R_1$ and $R_2$ denote $C_1$-$C_4$-alkyl or phenyl-$C_1$-$C_3$-alkyl and
$R_3$ and $R_4$ denote hydrogen, or
$R_1$ and $R_2$ can together form a radical of the formula $-(CH_2)_2-Z-(CH_2)_2-$,
$R_1$ and $R_4$ can form a radical of the formula $-(CH_2)_2-$, $-(CH_2)_3-$ or $-C(CH_3)_2-CH_2CH(CH_3)-$ and
$R_2$ and $R_3$ can form a radical of the formula $-(CH_2)_3-$
wherein
Z represents O, NH, $NCH_3$, $CH_2$ or a direct bond and
A represents a radical of the benzoxazole, benzimidazole, benzothiazole, quinazolone or thiadiazole series,
or of a dyestuff of the formula

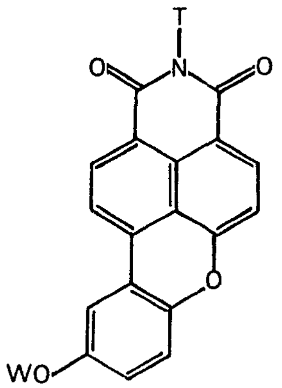

(Ib)

wherein
W represents $C_1$–$C_2$-alkyl and
T represents $C_1$–$C_6$-alkyl which is optionally substituted by OH, $C_1$–$C_4$-alkyl, phenyl of Cl, and a red dyestuff of the formula

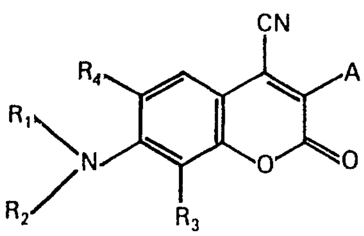

(II)

wherein
$R_1$, $R_2$, $R_3$, $R_4$ and A have the abovementioned meaning.

2. Dyestuff preparations according to Claim 1, containing a mixture of a dyestuff of the formula

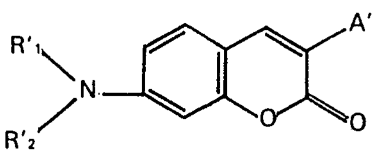

wherein
$R_1$ and $R_2$ represent $C_1$–$C_4$-alkyl and
A′ represents a radical of the formula

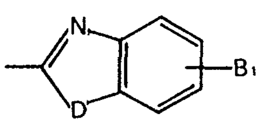

or

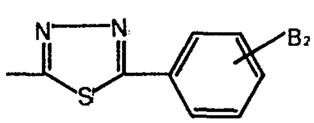

$B_1$ represents H, Cl, $CH_3$, $CH_3O$ or $C_2H_5$–O,
$B_2$ represents H, $CH_3$ or Cl and
D represents O, S, NH, N–$C_1$–$C_4$-alkyl or NHCO (CO on the aromatic ring)
and a dyestuff of the formula

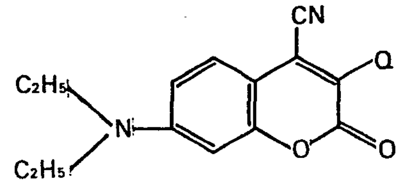

wherein
$R_1$, $R_2$ and A′ have the abovementioned meaning.

3. Dyestuff preparations according to Claim 1, containing a mixture of a dyestuff of the formula

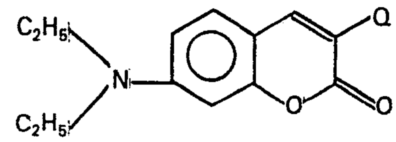

wherein
Q represents a radical of the formula

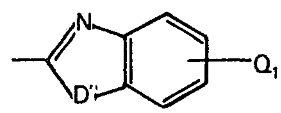

or

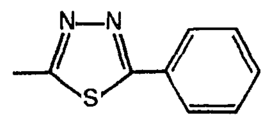

$Q_1$ represents H, $CH_3$ of Cl and
D′ represents O, S, NH or NHCO (CO on the aromatic ring) and a dyestuff of the formula

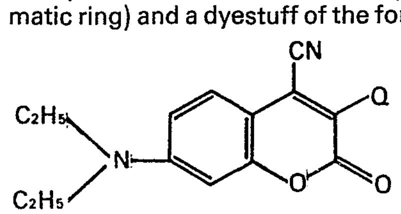

wherein
Q has the abovementioned meaning.

4. Dyestuff preparations according to Claim 3, wherein
D′ represents O or S.

5. Dyestuff preparations according to Claim 1, containing a mixture of a dyestuff of the formula

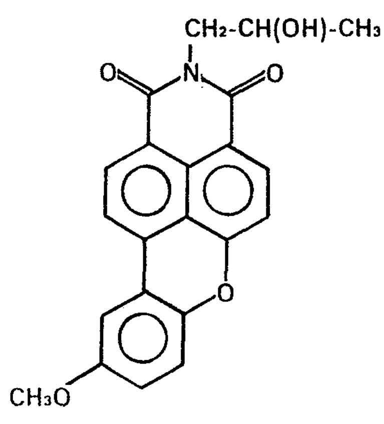

and a red dyestuff of the formula

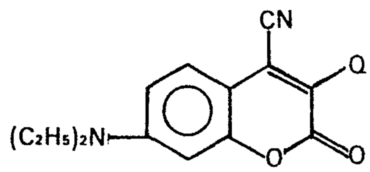

wherein
Q has the same meaning as in Claim 3,

6. Use of the dyestuff preparations according to Claim 1 for dyeing or printing textile materials for the production of warning clothing, warning signs and signal signs and sports articles.

7. Process for dyeing or printing textile materials, characterised in that dyebaths of printing pastes which contain a mixture of dyestuffs according to Claim 1 are used.

**Revendications**

1. Préparation tinctoriale de colorants dispersés fluorescents ayant une teinte orangée lumineuse conformément à la norme RAL 2005 établie par la commission pour les conditions de livraison et la sécurité des marchandises auprès de la commission des normes allemandes, et un facteur de luminance $\beta \geqq 0,45$ conformément à la norme DIN 16954, contenant un mélange d'un colorant jaune de formule

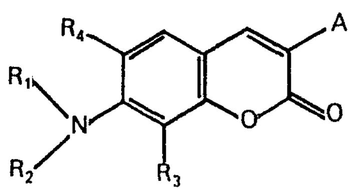

(Ia)

dans laquelle
$R_1$ et $R_2$ représentent un groupe alkyle en $C_1$ à $C_4$ ou phényl-(alkyle en $C_1$ à$C_3$) et
$R_3$ et $R_4$ désignent l'hydrogène,
$R_1$ et $R_2$ peuvent former ensemble un reste de formule

$-(CH_2)_2-Z-(CH_2)_2-$,

$R_1$ peut former avec $R_4$ un reste de formule $-(CH)_2-$, $-(CH_2)_3-$ ou $-C(CH_3)_2-CH_2-CH(CH_3)-$ et $R_2$ et $R_3$ peuvent former un reste de formule

$-(CH_2)_3-$,

Z représente O, NH, $NCH_3$, $CH_2$ ou une liaison directe,
A représente un reste de la série du benzoxazole, du benzimidazole, du benzothiazole, de la quinazolone ou du thiadiazole
ou d'un colorant de formule

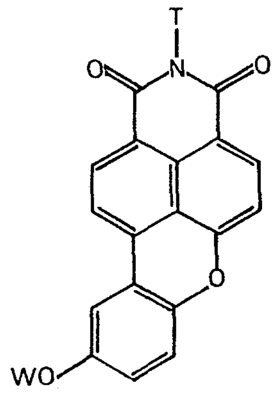

(Ib)

dans laquelle
W est un groupe alkyle en $C_1$ ou $C_2$,
T représente un groupe alkyle en $C_1$ à $C_6$ éventuellement substitué par OH, un groupe alkoxy en $C_1$ à $C_4$, un groupe phényle ou Cl,
avec un colorant rouge de formule

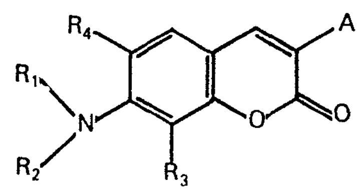

(II)

dans laquelle
$R_1$, $R_2$, $R_3$, $R_4$ et A ont la définition donnée ci-dessus.

2. Préparations tinctoriales suivant la revendication 1, contenant un mélange d'un colorant de formule

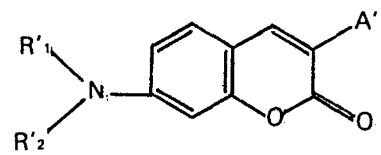

dans laquelle
$R'_1$ et $R'_2$ représentent un groupe alkyle en $C_1$ à $C_4$,
A' représente un reste de formule

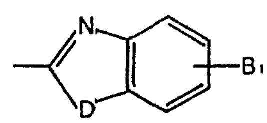

ou

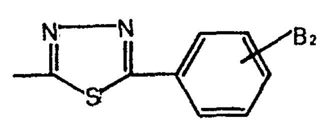

$B_1$ représente H, Cl, $CH_3$, $CH_3O$ ou $C_2H_5-O$
$B_2$ représente H, $CH_2$ ou Cl et
D représente O, S, NH, un groupe N-(alkyle en $C_1$, à $C_4$) ou NHCO (CO sur le noyau aromatique),
avec un colorant de formule

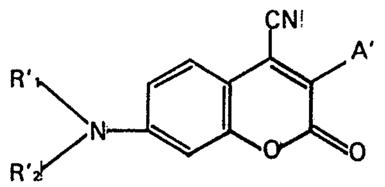

dans laquelle
$R'_1$, $R'_2$ et A′ ont la définition mentionnée ci-dessus.

3. Préparations tinctoriales suivant la revendication 1, contenant un mélange d'un colorant de formule

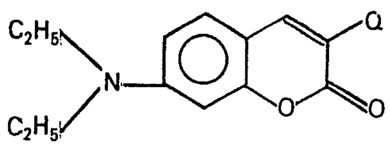

dans laquelle
Q représente un reste de formule

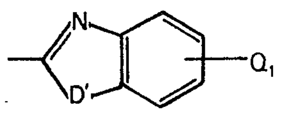

ou

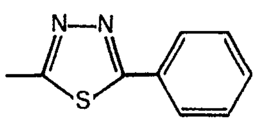

$Q_1$ représente H, $CH_3$ ou Cl et
D représente O, S, NH ou NHCO (CO sur le noyau aromatique),
avec un colorant de formule

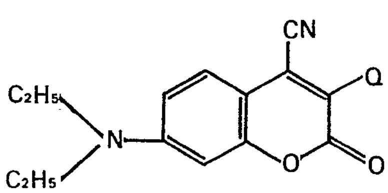

dans laquelle
Q a la définition mentionnée ci-dessus.

4. Préparations tinctoriales suivant la revendication 3, dans lesquelles D′ représente O ou S.

5. Préparations tinctoriales suivant la revendication 1, contenant un mélange d'un colorant de formule

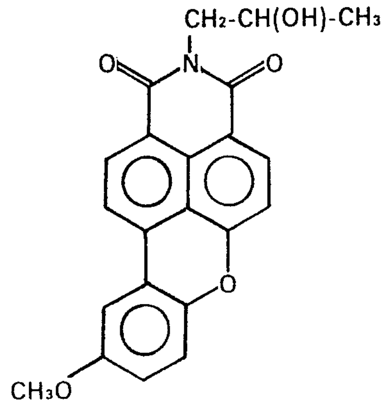

avec un colorant rouge de fomule

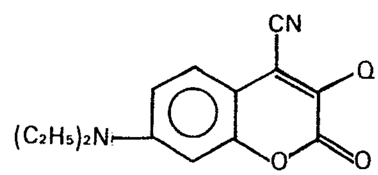

où Q a la même définition que dans la revendication 3.

6. Utilisation des préparations tinctoriales suivant la revendication 1 pour la teinture ou l'impression de matières textiles destinées à la production de vêtements de sécurité, de signaux avertisseurs et de signalisations et d'articles de sport.

7. Procédé de teinture ou d'impression de matières textiles, caractérisé en ce qu'on utilise des bains de teinture ou des pâtes d'impression qui contiennent un mélange de colorants suivant la revendication 1.